# EUROPEAN PATENT SPECIFICATION

(11) **EP 2 308 321 B1**
(45) Date of publication and mention of the grant of the patent: **25.07.2018**
(21) Application number: 10179077.2
(22) Date of filing: 23.09.2010
(51) Int. Cl.: A23P 10/28, A23L 27/30

(54) **Method for producing sweetening compositions**
Süssende Zusammensetzung
Composition édulcorante

(30) Priority: 23.09.2009 IT BO20090608
(43) Date of publication of application: 13.04.2011
(73) Proprietor: Valsoia S.p.A, 40138 Bologna (BO) (IT)
(72) Inventor: Giovannone, Daniele, 03100 Frosinone (IT); De Angelis, Carlo, 03035 Fontana Lieri (IT); Vallini, Veronica, 60015 Falconara Marittima (IT)
(74) Representative: Rossetti, Elena

(56) References cited:
- US-A- 4 886 677
- US-A- 5 080 916
- US-A1- 2006 073 255
- US-A1- 2008 161 417
- US-A1- 2011 038 945
- US-B1- 6 187 336

## Description

The present invention relates to a method for the production of a sweetening composition. Sweeteners (i.e., sweetening agents) are present both in the majority of so-called "sugar-free", "light" or "diet" products (chewing-gums, sweets, non-alcoholic beverages, yoghurt, jam, etc.) and in the so-called "table sweeteners", which can be formulated and are commercially available in different forms (tablets, sachets, powders, or drops). Solid sweetening compositions in general, and sweetening tablets in particular, usually contain one or more intensive sweeteners and "filling" substances (which bestow upon the preparation an appropriate volume) and are characterized by the capacity of solubilizing in aqueous solutions.
In addition to the active principles, the tablets (sweeteners and not) contain other ingredients that perform specific functions: "filling" substances (sugars, polyols, starches, and derivatives), binders (starches, cellulose, and derivatives), disgregants (starches, cellulose, alginates, polyvinylpyrrolidones), lubricants and machine anti-adherents (starch, silica, stearates, talcum, wax, polyethylene glycol, sodium/magnesium lauryl sulphate, leucine). For table sweeteners, the additive with function of machine lubricant/anti-adherent most commonly used is leucine.
Intensive sweeteners are substances with high sweetening power, usually from approximately 30 to 10 000 times that of saccharose. Since extremely small amounts thereof are sufficient to obtain the desired sweetening purpose, their caloric power is very low and practically nil.
Some from among the most widespread intensive sweeteners are: acesulfame K, aspartame, cyclamate, neohesperidin DC, neotame, saccharin, stevia (steviol glycosides), sucralose, thaumatin (the only intensive natural sweetener approved by current European standards), and corresponding salts.

Even though different sweetening formulations have been proposed, there remains in fact felt the need to identify new compositions that will have simultaneously as much as possible the following characteristics: aroma similar to saccharose, low caloric power, low glycemic impact (to improve the possibility of use thereof by diabetic subjects), substantial absence of potential allergens, substantial non-cariogenicity.

In this regard, it should be emphasized that xylitol, maltitol, sorbitol and/or mannitol are polyols very frequently used in table sweeteners as fillers. These polyols, in addition to having a certain caloric power (on average 2.4 kcal/g) and a considerable glycemic impact, have a limited digestive tolerance.

There have recently been proposed sweeteners comprising erythritol, which is a particular polyol.

Erythritol, has, on account of its small dimensions (4 carbon atoms), almost zero energy value and glycemic impact, and a high digestive tolerance. Erythritol, moreover, has anticariogenic characteristics similar to xylitol and is not a potential allergen.

So far no technology has been developed that will enable production of sweetening tablets in which erythritol is the prevalent component (> 50 wt%) in the absence of further polyols or of specific binding agents. Owing to its physicochemical nature, in fact, erythritol is very difficult to compress.

US4886677 discloses a composition of meso-erythritol comprising very low percentages of intensive sweetener, i.e. lower than 1 wt%. In particular, in Example 2, aspartame has a concentration of approximately 0.7 wt%; in Example 4, aspartame has a concentration of approximately 0.4 wt%; in Example 6, stevioside has a concentration of approximately 0.2 wt%; in Example 7, aspartame has a concentration of approximately 0.4 wt%. Example 20 does not suggest in any way a drying of the solution (also because the water has a concentration of approximately 50 wt%), but a spontaneous precipitation of crystals, which, on the other hand, never contain saccharin in a concentration higher than 0.5 wt% (see Table 11). It should moreover be noted that the composition comprises powders or granules of meso-erythritol, which are only modified superficially and are moulded by compression (see, *inter alia,* column 2, lines 7-11).

US6187336 discloses a method that envisages the treatment of a mixture containing erythritol so as to obtain tablets that are subsequently dried. The mixture comprises aspartame and stevia in a concentration of less than 1 wt%, in particular approximately 0.9 wt% (see the combination of Examples 10 and 11). The sum of the weights of aspartame and stevia in the tablets is less than 2% of the weight of the tablets; in particular it is approximately 1 wt% (combination of Examples 10 and 11).

US5080916 discloses a sweetening composition constituted by particles of mesoerythritol only coated with a sweetening component (abstract, lines 2-5). In Example 1 of this document, an amount of saccharin of less than 2 wt% is used. In Example 2 of this document, a weight percentage of water of less than 1 wt% is used.

US2006/073255 discloses a sweetening composition that is obtained starting from a mixture. The mixture comprises an amount of water of more than 10 wt% (see, in particular, paragraph [0043], lines 1-4; paragraph [0044], lines 8-10), more specifically more than 20 wt%. In Example 1, the percentage of sucralose is less than 1 wt% (approximately 0.6 wt%). In Example 2, the percentage of sucralose is less than 1 wt% (approximately 0.6 wt%), the percentage of water is much higher than 20 wt%, and the percentage of erythritol in the wet mixture is less than 50 wt%. In Example 3, the percentage of sucralose is less than 2 wt% (approximately 1 wt%), the percentage of water is much higher than 20 wt%, and the percentage of erythritol in the wet mixture is less than 50 wt%. It should moreover be noted that in this document as intensive sweeteners only chlorinated sugars such as sucralose are cited.

US6083438 discloses a process of production of sweetening tablets. Such tablets comprise a mixture of erythritol and a further polyol (mannitol, sorbitol, maltitol, or xylitol) co-crystallized following upon melting and subsequent cooling of the mixture. The presence of the further polyol is necessary to guarantee the necessary solidity of the tablets, but has a negative effect, as has been said, on the glycemic, caloric characteristics and characteristics of digestive tolerability of the product.

US5973212 describes a technology of direct compression starting from a preparation of erythritol obtained by spray drier, wherein the addition of a maltodextrin is an essential condition for obtaining tablets with acceptable properties (hardness).

On the basis of what has been said above, it is clear that the sweetening compositions so far proposed have dietary characteristics (energy value, glycemic impact, allergenicity, cariogenicity, and/or digestive tolerance) that are not completely satisfactory. Furthermore, the known methodologies of production are relatively complex and expensive.

The aim of the present invention is to provide a sweetening composition and a method for the production of a sweetening composition, which will enable, at least partially, the drawbacks of the known art to be overcome and will be, at the same time, easy and economically advantageous to produce.

According to the present invention, a method for the production of a sweetening composition is provided according to what is specified in the ensuing claims 1-8. The invention is described hereinafter with reference to the annexed drawings, which illustrate a non-limiting example of embodiment thereof and in which:
- Figure 1 is a differential-scanning-calorimetry (DSC) curve of a composition in accordance with the present invention; appearing on the abscissa is the temperature in degrees centigrade (°C) and appearing on the ordinate is the heat flow in milliwatts (mW);
- Figure 2 is a differential-scanning-calorimetry (DSC) curve of erythritol; appearing on the abscissa is the temperature in degrees centigrade and appearing on the ordinate is the heat flow in milliwatts;
- Figure 3 a differential-scanning-calorimetry (DSC) curve of a dry formulation containing erythritol and intensive sweeteners; appearing on the abscissa is the temperature in degrees centigrade and appearing on the ordinate is the heat flow in milliwatts;
- Figure 4 is an x-ray-diffraction spectrum of a dry formulation containing erythritol and intensive sweeteners;
- Figure 5 is an x-ray-diffraction spectrum of a composition according to the present invention; and
- Figure 6 is a comparison between specimens of Figures 4 and 5.

The weight percentages appearing in the present text are referred to the total weight of the sweetening composition, unless otherwise explicitly indicated.
According to some embodiments, erythritol and the intensive sweetener are in the combined form when they have a differential-scanning-calorimetry (DSC) curve with disappearance of the individual peaks of the intensive sweeteners and transformation of a characteristic endothermic peak of erythritol into a single widened endothermic hump. More in particular, the aforementioned differential-scanning-calorimetry curve has a shift of the endothermic peak of erythritol to lower melting values. According to some embodiments, the combined form has a differential-scanning-calorimetry (DSC) curve with a peak at less than approximately 124°C (in particular, 120°C). In particular, the combined form has a differential-scanning-calorimetry (DSC) curve with a peak at less than or equal to approximately 117°C. According to specific embodiments, the peak of the aforementioned curve of thermal analysis is higher than or equal to approximately 110°C. More in particular, the aforementioned differential-scanning-calorimetry curve has a (full) width at half maximum of at least 9°C. According to some embodiments, the (full) width at half maximum ranges from 10°C to 15°C.

Advantageously, the differential-scanning-calorimetry curve is measured with a PERKIN ELMER scanning differential calorimeter, model Pyris 7, equipped with a liquid-nitrogen temperature-control system at a flow of approx. 30 ml/min; the specimens were analysed in the range between 50°C and 300°C at a scanning rate of 10°C/min.

According to some embodiments, the x-ray-diffraction spectrum of the combined form differs from the x-ray-diffraction spectrum obtained for a combination in which each component is in a crystalline form that is independent as regards number and/or position and/or intensity of the diffraction peaks (Bragg peaks).

According to some embodiments, the x-ray-diffraction spectrum of the combined form is without at least one peak selected from the group consisting of: centred at about 0.45±0.05 nm-1, centred at about 2.05±0.05 nm-1, centred at about 2.15±0.05 nm-1.: centred at approximately 0.45 nm⁻¹, centred at approximately 2.05 nm⁻¹, centred at approximately 2.15 nm⁻¹ (these measurements are provided with an approximation of roughly ±0.05 nm⁻¹). Advantageously, the x-ray-diffraction spectrum of the combined form does not have any of the following peaks: centred at approximately 0.45 nm⁻¹, centred at approximately 2.05 nm⁻¹, centred at approximately 2.15 nm⁻¹ (these measurements are provided with an approximation of roughly ±0.05 nm⁻¹). In other words, the aforesaid peaks, present in the x-ray-diffraction spectrum of substantially crystalline and pure erythritol, substantially disappear, no longer being discernible from the background noise.

According to some embodiments, the x-ray-diffraction spectrum of the combined form presents at least one intensity peak different from a peak of the x-ray-diffraction spectrum of substantially crystalline and pure erythritol at approximately the same frequency; the peak is selected in the group consisting of: centred at approximately 1.05 nm⁻¹, centred at approximately 1.4 nm⁻¹, centred at approximately 1.7 nm⁻¹ (these measurements are provided with an approximation of roughly ±0.05 nm⁻¹). Advantageously, the x-ray-diffraction spectrum of the combined form has the following peaks of intensity different from the x-ray diffraction peaks of substantially pure and crystalline erythritol at approximately the same frequency: centred at approximately 1.05 nm⁻¹, centred at approximately 1.4 nm⁻¹, centred at approximately 1.7 nm⁻¹ (these measurements are provided with an approximation of roughly ±0.05 nm⁻¹).
According to specific embodiments, the x-ray-diffraction spectrum of the combined form has at least one peack selected from the group consisting of: centred at approximately 0.85 nm⁻¹, centred at approximately 1.25 nm⁻¹, centred at approximately 1.45 nm⁻¹ (these measurements are provided with an approximation of roughly ±0.05 nm⁻¹). Advantageously, the x-ray-diffraction spectrum of the combined form has the following peaks: centred at approximately 0.85 nm⁻¹, centred at approximately 1.25 nm⁻¹, centred at approximately 1.45 nm⁻¹ (these measurements are provided with an approximation of roughly ±0.05 nm⁻¹). In other words, the aforesaid peaks, which cannot substantially be discerned from the background noise in the x-ray-diffraction spectrum of substantially crystalline and pure erythritol, appear in a discernible way. Advantageously, the x-ray-diffraction spectrum is measured with a diffractometer (Philips) and chambers of a Guinier type (λ = 1.54 Å; power: 40 mA x 40 kV). The composition described herein comprises a weight percentage of erythritol that is less than or equal to 85 wt%. According to some embodiments, the composition comprises a weight percentage of erythritol that is less than or equal to 65 wt%. According to some embodiments, the composition comprises a weight percentage of erythritol that is higher than or equal to 55 wt%.
In the present text, by "intensive sweetener" is meant a sweetener having at least 25 times the sweetening power of saccharose given the same weight. Advantageously, the intensive sweetener has at least 29 times the sweetening power of saccharose given the same weight.
In this regard, it should be emphasized that, even though the sweetening power is variable subjectively, for each known sweetener the sweetening power (expressed in percent with respect to saccharose, considered as 100) is well defined and there exist widely documented values. In the absence of documented values, it is in any case possible to make an evaluation of the sweetening power by means of panel tests of comparison with sweeteners of which the sweetening power is known (for example saccharose).
According to some embodiments, the intensive sweetener is selected in the group consisting of: acesulfame K, aspartame, cyclamate, neohesperidin DC, neotame, saccharin, stevia, sucralose, thaumatin, their corresponding salts and a combination thereof. In particular, the intensive sweetener is selected in the group consisting of: acesulfame K, aspartame, cyclamate, neotame, saccharin, stevia, sucralose, thaumatin, their corresponding salts and a combination thereof. According to particular embodiments, the intensive sweetener is selected in the group consisting of: acesulfame, cyclamate, saccharin, and a combination thereof. According to specific embodiments, the intensive sweetener is a mixture of acesulfame, cyclamate, and saccharin. More in particular, the intensive sweetener comprises from 29 wt% to 35 wt%, with respect to its own total weight (i.e., the weight of the intensive sweetener), of saccharin, and from 7 wt% to 12 wt%, with respect to its own total weight (i.e., the weight of the intensive sweetener), of acesulfame. Advantageously, the intensive sweetener comprises from 57 wt% to 63 wt%, with respect to its own total weight (i.e., the weight of the intensive sweetener), of cyclamate. Advantageously, the acesulfame, cyclamate, and saccharin are potassium acesulfame, sodium cyclamate, and sodium saccharin, respectively. The composition described herein comprises a weight percentage of intensive sweetener that is higher than or equal to 10 wt%. According to some embodiments, the composition comprises a weight percentage of intensive sweetener that is less than or equal to 40 wt%. More in particular, the composition comprises a weight percentage of intensive sweetener that is less than or equal to 35 wt%.

According to some embodiments, the composition comprises a weight percentage of cyclamate of from 1 wt% to 50 wt%. Advantageously, the composition comprises a weight percentage of cyclamate of from 5 wt% to, in particular, 25 wt%.

According to some embodiments, the composition comprises a weight percentage of saccharin of from 1 wt% to 25 wt%. Advantageously, the composition comprises a weight percentage of saccharin of from 2.5 wt% to, in particular, 12.5 wt%.

According to some embodiments, the composition comprises a weight percentage of acesulfame of from 1 wt% to 10 wt%. Advantageously, the composition comprises a weight percentage of acesulfame of from 1.5 wt% to, in particular, 8.5.

According to some embodiments, the composition comprises (more in particular, consists of) : erythritol (as defined above), the intensive sweetener (as defined above), and at least one excipient chosen in the group consisting of: stearic acid, maize starch, pre-gelatinized starch, glyceride behenate, dibasic calcium phosphate, microcrystalline cellulose, lactose monohydrate, magnesium stearate, polyvinylpyrrolidone (homopolymer of 1-ethenyl 2-pyrrolidone), sodium starch glycolate, croscarmellose sodium, polyvinylpolypyrrolidone, sodium starch glycolate (Explotab®), carboxymethyl starch (CMC®), polyethylene glycol (PEG), talcum, precipitated silica.

Advantageously, the PEG is chosen in a group consisting of: PEG 4000, PEG 6000, PEG 8000, and PEG 20000. PEG 4000, PEG 6000, PEG 8000, and PEG 20000 indicate polyethylene glycols with different molecular weights.

According to some embodiments, the composition is in the form of simple or filmed tablet. By "simple tablet" is meant a tablet obtained by compression after granulation without filming. By "filmed tablet" is meant a tablet coated with functional substances (i.e., substances that provide a particular function to the coating film - gastroresistance, retarding effect, effect of masking the taste, etc.) or non-functional substances (which bestow on the film only an effect of aesthetic appearance of said tablets).

The composition can be, then, filmed with water paint or alcohol and/or hydro-alcoholic mixtures preferably using excipients selected from among the components forming part of the composition of the tablet itself, for example: erythritol, PVP, PEG, and/or mixtures thereof.

Advantageously, the composition comprises from 0.5 wt% to 10 wt% of polyvinylpolypyrrolidone. According to some embodiments, the composition comprises from 1 wt% to 5 wt% (advantageously 3 wt%) of polyvinylpolypyrrolidone. According to some embodiments, the composition comprises a weight percentage of polyvinylpolypyrrolidone that is less than or equal to 5 wt% and, advantageously, higher than or equal to approximately 1 wt%.

It should be noted that polyvinylpolypyrrolidone has, in particular, a disgregating function.

According to specific embodiments, polyvinylpolypyrrolidone is selected in the group consisting of: Polyplasdone® XL10, Polyplasdone® INF10, and a mixture thereof.

According to some embodiments, the composition comprises (more in particular, consists of): erythritol (as defined above), the intensive sweetener (as defined above) and polyvinylpolypyrrolidone (as defined above).

According to some embodiments, the composition comprises a weight percentage of maltodextrins of less than 0.1 wt% (i.e., from 0 wt%, included, to 0.1 wt%). In other words, the composition is without maltodextrins or contains a very low weight percentage thereof.
According to some embodiments, the composition comprises a weight percentage of further polyols in addition to the ones indicated above of less than 0.1 wt% (i.e., from 0 wt%, included, to 0.1 wt%). In other words, the composition is without polyols in addition to the ones indicated above or contains a very low weight percentage thereof.
According to some embodiments, the composition comprises a weight percentage of monosaccharides of less than 0.1 wt%. In other words, the composition is without monosaccharides or contains a very low weight percentage thereof.
According to some embodiments, the composition comprises a weight percentage of polysaccharides of less than 0.1 wt% In other words, the composition is without polysaccharides or contains a very low weight percentage thereof. The present invention provides a method for the production of a sweetening composition comprising a weight percentage of erythritol and a weight percentage of an intensive sweetener as defined in accordance with what has been set forth above regarding in the composition described herein.

The method comprises:
a step of wet mixing, during which a wet mixture is mixed; the wet mixture comprises (more in particular consists of) erythritol, the intensive sweetener and water; and a drying step, which is at least partially subsequent to the step of wet mixing and during which the wet mixture is at least partially dried so as to obtain a substantially dry mixture; the substantially dry mixture comprises from 0.1 wt% to 0.6 wt% (KF), with respect to the weight of the substantially dry mixture, of water.

According to some embodiments, the method comprises a step of dry mixing, which substantially precedes the step of wet mixing and envisages mixing erythritol together with the intensive sweetener. In particular, the step of dry mixing has a duration of approximately 10 minutes.

Advantageously, the weight percentage of water in the wet mixture is higher than or equal to 2 wt% (with respect to the weight of the wet mixture). In particular, the weight percentage of water in the wet mixture is less than or equal to 10 wt% (with respect to the weight of the wet mixture). According to some embodiments, the weight percentage of water in the wet mixture is from 3 wt% to 7 wt% (with respect to the weight of the wet mixture). In particular, the weight percentage of water is less than or equal to 5 wt% (with respect to the weight of the wet mixture).

According to some particular embodiments, the step of wet mixing has a duration from 15 to 30 minutes (advantageously, approximately 20 minutes).

According to some embodiments, the steps of wet mixing (and possibly dry mixing) are performed in an environment in which the relative humidity is less than 50% and the temperature is between 20 and 25°C (advantageously, approximately 20°C).

It has been experimentally found that at the end of the step of wet mixing a white and soft mass is obtained. It should be noted that, surprisingly, the crystalline appearance of the individual substances is (at least partially) lost. Next (after the drying step), a combined crystalline form is, instead, (at least partially) obtained.

According to some embodiments, the weight percentages in the wet mixture (with respect to the weight of the wet mixture itself) of erythritol and of the intensive sweetener are defined, as in accordance with the first aspect of the present invention, with respect to the composition.

According to some embodiments, the drying step is carried out at a temperature of from 55°C to 70°C (advantageously, at approximately 60°C). In particular, the drying step is carried out in a static bed. According to some embodiments, the drying step has a duration of approximately 6 hours.

Alternatively, the drying step can be carried out in fluid-bed dryers at a temperature of 45-60°C, for approximately 30-120 minutes.

The method further comprises a granulation step, which is subsequent to the drying step and during which the substantially dry mixture is granulated. According to some embodiments, the granulation step is performed by means of an oscillating granulator provided with a mesh with a diameter of less than approximately 1.5 mm (advantageously, with a diameter of approximately 0.7 to approximately 1 mm).

According to some embodiments, the method comprises a compression step, during which the granules obtained during the granulation step are pressed together so as to obtain tablets. Advantageously, the compression is made using a suitable compressor machine, equipped with steel punches of a diameter of 5 mm.

It has been experimentally found that, surprisingly, the tablets produced in accordance with what has been described above meet the following requirements:
Hardness: 1.3-2.0 KP
Disgregation: ≤15 s
Friability: ≤1 wt% (for the methodologies of measurement see Example 1 appearing below).

According to some embodiments, the aforementioned method comprises a step of addition, which precedes the compression step and during which added to the erythritol and to the intensive sweetener is at least one of the excipients indicated with reference to the first aspect of the present invention.

According to some embodiments, the addition step is subsequent to the drying step. Advantageously, during the addition step, the excipient is mixed together with granules obtained during the granulation step.

According to some embodiments, during the addition step polyvinylpolypyrrolidone is added. Advantageously, during the addition step, there is added from 0.5 wt% to 10 wt%, with respect to a sum of the weights of erythritol and of the intensive sweetener, of polyvinylpolypyrrolidone.

According to some embodiments polyvinylpolypyrrolidone is added in the form of particles of larger dimensions, i.e., having a diameter ranging from 10 µm to approximately 100 µm, and particles of smaller dimensions, i.e., having a diameter of less than 10 µm.

According to some embodiments, during the addition step there is added from 1 wt% to 5 wt%, with respect to a sum of the weights of erythritol and of the intensive sweetener, of polyvinylpolypyrrolidone in particles having a diameter ranging from approximately 30 to approximately 50 µm, and/or (in particular and) from 1 wt% to 5 wt%, with respect to a sum of the weights of erythritol and of the intensive sweetener, of polyvinylpolypyrrolidone in particles having a diameter ranging from approximately 5 at approximately 10 µm.

According to some embodiments, the weight ratio between the particles of larger dimensions and the particles of smaller dimensions is from 1.2 to 1.8. According to some embodiments, there are added from 0.5 wt% to 10 wt%, with respect to the weight of the composition, of particles of larger dimensions. According to some embodiments, there are added from 0.5 wt% to 10 wt%, with respect to the weight of the composition, of particles of smaller dimensions. According to some embodiments, there are added from 1 wt% to 5 wt%, with respect to a sum of the weights of erythritol and of the intensive sweetener, of particles of larger dimensions. According to some embodiments, there are added from 1 wt% to 5 wt%, with respect to a sum of the weights of erythritol and of the intensive sweetener, of particles of smaller dimensions.

According to some embodiments, the particles of larger dimensions have a diameter ranging from approximately 30 to approximately 50 µm. According to some embodiments, the particles of smaller dimensions have a diameter ranging from approximately 5 to approximately 10 µm.
The dimensions of the particles of polyvinylpolypyrrolidone can be measured by means of scanning electron microscope (SEM). In particular, a SEM (Zeiss EVO 40.D) can be used connected to an x-ray energy-dispersion spectrometer (EDS) (Inca, Oxford Instruments, UK).
According to specific embodiments, the particles of larger dimensions are Polyplasdone® XL10, and the particles of smaller dimensions are Polyplasdone® INF10 and a mixture thereof.
According to some embodiments, during the addition step PEG is added. Advantageously, the PEG is chosen in a group consisting of: PEG 4000, PEG 6000, PEG 8000, and PEG 20000.
Optionally, during the addition step, a further ingredient is added, chosen from among (natural or artificial) aromas, colorants, or essences, or a mixture thereof.

To our knowledge, there do not exist examples of formulates that, without the addition of essential functional excipients, such as lubricants, binders, and anti-adherents, can be subjected to the compressing step without encountering problems of manufacturability and/or rheological problems of the tablet itself, such as friability, hardness, smoothness, kapping.
The main reason is the extreme difficulty of obtaining a suitable semi-finished product and/or finding excipients that combine in themselves the properties of different functional excipients notoriously known for their specific and essential properties in the production step.

The present invention possesses substantially all the rheological properties necessary for obtaining the tablet that otherwise would be obtained only with complex mixtures of other functional excipients.
As a consequence a mixture is obtained that is very simple, with erythritol as main component, with complete technological properties, and a considerably simplified production process. The results obtained are particularly surprising also taking into account the fact that erythritol has a very low compressibility by direct compression.
It should also be emphasized that the composition obtained in accordance with the present invention has also surprisingly shown a palatability exceptionally similar to that of saccharose, but has an extremely low caloric content (practically zero) and an extremely low glycemic impact.
Further characteristics of the present invention will emerge from the ensuing description of some merely illustrative and non-limiting examples.

### Example 1

**QUALITATIVE-QUANTITATIVE COMPOSITION**

| ***Description of the components*** | ***Quantity*** | | *Function* |
|---|---|---|---|
| ***Active ingredients*** | *wt%* | ***mg per tablet*** | |
| *Erythritol* | 57.00 | *28.50* | *Active ingredient* |
| *Sodium Cyclamate* | 20.00 | *10.00* | *Active ingredient* |
| *Sodium saccharin* | 10.00 | *5.00* | *Active ingredient* |
| *Potassium acesulfame* | 3.00 | *1.50* | *Active ingredient* |

| ***Excipients*** | | | |
|---|---|---|---|
| *Microcrystalline cellulose* | 2.00 | ***1.00*** | ***Binder* /*disgregrant*** |
| *Polyplasdone XL-10 (1-vinyl 2 pyrrolidone)* | 5.00 | *2.50* | *Disgregrant* |
| *Leucine* | 3.00 | *1.50* | *Anti-adherent* |
| ***Weight of tablet*** | 100.00 | ***50.00*** | |

All the active ingredients (sweetening principles + erythritol) were dry mixed and worked by direct compression. The resulting product had rheological characteristics that were unsuitable for formation of the tablet.

By "suitable rheological characteristics" is meant the absence of any defect in a tablet during manufacture: hardness approximately 1.4 - 1.8 KP (the hardness is measured according to what is described in the European Pharmacopoeia third edition, 1997), friability below approximately 1% (the friability is measured according to what is described in the European Pharmacopoeia third edition, 1997), so that during packaging the tablet does not break, and disgregation according to the specification of less than approximately 15 seconds (the disgregation is measured according to what is described in the European Pharmacopoeia third edition, 1997). Different characteristics are not considered suitable.

The functions indicated in the table of QUALITATIVE-QUANTITATIVE COMPOSITION appearing above (and also in the subsequent tables of QUALITATIVE-QUANTITATIVE COMPOSITION) are only indicative and frequently indicate only the main function of a given component (a component could have, and frequently has, further functions).

### Example 2

**QUALITATIVE-QUANTITATIVE COMPOSITION**

| ***Description of the components*** | ***Quantity*** | | *Function* |
|---|---|---|---|
| ***Active ingredients*** | *wt%* | ***mg per tablet*** | |
| *Erythritol* | 62.00 | *31.00* | *Active ingredient* |
| *Sodium cyclamate* | 20.00 | *10.00* | *Active ingredient* |
| *Sodium saccharin* | 10.00 | *5.00* | *Active ingredient* |
| *Potassium acesulfame* | 3.00 | *1.50* | *Active ingredient* |

| ***Excipients*** | | | |
|---|---|---|---|
| *Leucine* | 3.00 | *1.50* | *Anti-adherent* |
| ***Tablet weight*** | 100.00 | ***50.00*** | |

The active ingredients (sweetening principles + erythritol) were dissolved together until an aqueous solution with 40-50% of dry substance was obtained, then dried by spraying, until a dry mass was obtained with residual content of water of between 0.1% and 0.6% KF (K.F. and KF indicate that the percentage of water was calculated according to the Karl Fischer method). The mass was processed in a rocking granulator with a 1000µm mesh. The granules obtained were mixed with the excipient and finally compressed. The resulting product had rheological characteristics unsuitable for formation of the tablet on account of the physical aspect of the powders not suitable for compressibility.

### Example 3

**QUALITATIVE-QUANTITATIVE COMPOSITION**

| ***Description of the components*** | ***Quantity*** | | *Function* |
|---|---|---|---|
| ***Active ingredients*** | *wt%* | ***mg per tablet*** | |
| *Erythritol* | 57.00 | *28.50* | *Active ingredient* |
| *Sodium Cyclamate* | 20.00 | *10.00* | *Active ingredient* |
| *Sodium saccharin* | 10.00 | *5.00* | *Active ingredient* |
| *Potassium acesulfame* | 3.00 | *1.50* | *Active ingredient* |

| ***Excipients*** | | | |
|---|---|---|---|
| *Microcrystalline cellulose* | 2.00 | ***1.00*** | ***Binder*** |
| *Polyplasdone XL-10 (1-vinyl 2 pyrrolidone)* | 5.00 | *2.50* | *Disgregrant* |
| *Leucine* | 3.00 | *1.50* | *Anti-adherent* |
| ***Tablet weight*** | 100.00 | ***50.00*** | |

The active ingredients (sweetening principles + erythritol) were mixed with an amount of water of 3.5% of the entire weight and kneaded for approximately 20 minutes until an amorphous, white, and soft mass was obtained; the product was then dried at 60°C until the water content of the mass to be granulated was reduced to between 0.1% and 0.6% KF (approximately 6 hours). The mix was worked in a rocking granulator with a 1000µm mesh. The granules were mixed with the excipients and finally compressed. The rheological characteristics of the tablets obtained were suitable and adequate for formation of the tablet.

Erythritol and the intensive sweetener were combined so as to define a combined crystalline form.

### Example 4

**QUALITATIVE-QUANTITATIVE COMPOSITION**

| ***Description of the components*** | ***Quantity*** | | *Function* |
|---|---|---|---|
| ***Active ingredients*** | *wt%* | ***mg per tablet*** | |
| *Erythritol* | 57.00 | *28.50* | *Active ingredient* |
| *Sodium Cyclamate* | 20.00 | *10.00* | *Active ingredient* |
| *Sodium saccharin* | 10.00 | *5.00* | *Active ingredient* |
| *Potassium acesulfame* | 3.00 | *1.50* | *Active ingredient* |

| ***Excipients*** | | | |
|---|---|---|---|
| *Klucel (hydroxypropyl cellulose)* | 4.00 | ***2.00*** | ***Binder*** |
| *Polyplasdone XL 10 (1-vinyl 2 pyrrolidone)* | 5.00 | *2.50* | *Disgregrant* |
| ***Magnesium stearate*** | 1. 00 | *0.50* | *Anti-adherent* |
| ***Tablet weight*** | 100.00 | ***50.00*** | |

Wet mixture as per Example 3, obtained using different excipients. The characteristics of the tablets thus obtained proved adequate and comparable to the product as per Example 3.

### Example 5

**QUALITATIVE-QUANTITATIVE COMPOSITION**

| ***Description of the components*** | ***Quantity*** | | *1. Function* |
|---|---|---|---|
| ***Active ingredients*** | *wt%* | ***mg per tablet*** | |
| *Erythritol* | 59.00 | *29.50* | *Active ingredient* |
| *Sodium Cyclamate* | 20.00 | *10.00* | *Active ingredient* |
| *Sodium saccharin* | 10.00 | *5.00* | *Active ingredient* |
| *Potassium acesulfame* | 3.00 | *1.50* | *Active ingredient* |

| ***Excipients*** | | | |
|---|---|---|---|
| *Sodium carboxymethylcellulose* | *5.00* | *2.50* | *Disgregrant* |
| *Leucine* | 3.00 | *1.50* | *Anti-adherent* |
| ***Tablet weight*** | 100.00 | ***50.00*** | |

Wet mixture as per Example 3, without binding agents, with sodium carboxymethylcellulose as disgregant and leucine as anti-adherent. The mechanical characteristics of the tablets thus obtained proved adequate and comparable to the products of Examples 3 and 4. Given that the tablets of Examples 3 and 4 are comparable to those of Example 5 is was shown that the presence of a binder in the compositions in accordance with the present invention is not necessary.

### Example 6

**QUALITATIVE-QUANTITATIVE COMPOSITION**

| ***Description of the components*** | ***Quantity*** | | *2. Function* |
|---|---|---|---|
| ***Active ingredients*** | *wt%* | ***mg per tablet*** | |
| *Erythritol (A)* | 60.50 | *30.25* | *Active ingredient* |
| *Sodium Cyclamate (B)* | 20.00 | *10.00* | *Active ingredient* |
| *Sodium saccharin (C)* | | *5.00* | *Active ingredient* |
| *Acesulfame potassium (D)* | 3.00 | *1.50* | *Active ingredient* |

| ***Excipients*** | | | |
|---|---|---|---|
| *Polyplasdone XL-10 (1-vinyl 2 pyrrolidone) (less than 100 µm) (E)* | 2.00 | *1.00* | *Disgregrant* |
| *Polyplasdone INF 10 (1-vinyl 2 pyrrolidone) (less than 10 µm) (F)* | 1. 00 | *0.50* | *Lubricant Disgregant* |
| *atomized PEG 6000 (G)* | 2.00 | ***1.00*** | ***Anti-adherent*** |
| ***Tablet-core weight*** | 98.50 | ***49,25*** | |

| ***POLISHING*/*FILMING*** | | | |
|---|---|---|---|
| *PEG 6000 in 95° alcoholic solution*/*dispersion (H)* | 1.50 | ***0.75*** | ***Filming*/*Polishing agent*** |
| ***tablet total weight*** | 100.00 | ***50.00*** | |

### PROCESS

### 6.1. Mixing

The working environment was conditioned at a temperature of 20°C and at a value of relative humidity of approximately 50% R.H. (R.H. indicates the relative humidity and is measured by means of a hygrometer). A, B, C and D were then transferred, in the amounts indicated above, into the kneading mixer, and left under stirring for approximately 10 minutes.

### 6.2. Mix

The active ingredients as per Point 6.1, were mixed and moistened with 3.5% of water, kneaded for approximately 20 minutes until a white and soft amorphous mass was obtained.

### 6.3. Drying

The product as per Point 6.2. was transferred into purposely provided stainless-steel griddles and then dried for 6 hours at 60°C in purposely provided thermostatted and ventilated stoves until the content in water of the mass to be granulated was reduced to between 0.4 and 0.6% KF.

### 6.4. Granulation

The product as per Point 6.3. was granulated on a 700µm-to-1200µm mesh once again in an environment with controlled humidity using a rocking granulator. The granular powder obtained responded to a specific granulometric analysis; the granulometry was measured according to what is described in the F.U.I. (Farmacopea Ufficiale Italiana) IX edition, volume I page 29. In particular, the granulometric analysis was the following:
Fraction of granules greater than 1000 µm: approx. 10%
Fraction of granules greater than 800 µm: approx. 30%
Fraction of granules greater than 600 µm: approx. 20%
Fraction of granules greater than 400 µm: approx. 20%
Fraction of granules greater than 100 µm: approx. 10%
Fraction of granules less than 100 µm: approx. 10%

### 6.5 Mixing

The granulate obtained in Step 6.4 was transferred into the mixer by adding quantitatively E, F and G. It was left under stirring for approximately 30 minutes. At the end of said operation, the resulting mixture was transferred into dry containers.

### 6.6 Compression

The final compression of the granulate was carried out by means of a rotary machine provided with round punches of a diameter of 5 mm by adjusting the weight to 50 mg per tablet and the force of compression at at least 1.4 - 1.8 KP.

The tablets obtained had the peculiar characteristic of being substantially without caloric power, in so far as, irrespective of the amounts used, all the ingredients and the excipients contained are substantially non-caloric.

The tablets produced had a hardness of between 1.4 and 1.8 KP.
friability: ≤ 1.0%;
disaggregation time: ≤ 5 s
humidity according to K.F. ≤ 1.50%

The stability tests on the non-filmed tablets were performed only at 40°C and 75% R.H. for six months and for a single lot in so far as it is not a finished product. The specimens were preserved in dispensers as final packaging.

**Table 1**

| Lot 001- cores of a weight of 50 mg/tablet (qualitative/quantitative composition as per Example 6) | | | | |
|---|---|---|---|---|
| Lot (T/t)¹ | Humidity wt% (K. Fischer) | Disgregation² (s) | Appearance ³ | Colour⁴ |
| 001 (20/0) | 0.66 | 5.00 | Compliant | White |
| 001A (40/1) | 0.56 | 5.33 | Compliant | White |
| 001B (40/3) | 0.84 | 5.54 | Compliant | White |
| 001C (40/6) | 1.35 | 5.76 | Compliant | White |

| | | | | |
|---|---|---|---|---|
| ¹ Temperature (°C)/time (months). | | | | |

The data in Table 1 highlight the excellent stability of the tablets.

### 6.7 Coating of the tablet (filming/polishing)

The tablets resulting from the previous processing steps were filmed in a perforated coating pan with a 95° alcohol mixture and PEG 6000 (2.0 mg/tablet).

In a 2.0-litre glass container, the 95° alcohol was poured, and the PEG 6000 was suspended up to complete homogeneity of the resulting suspension.

After pre-heating of the coating pan at approximately 30°C, roughly 250 kg of tablets were introduced and left to heat up to 30°C. Then filming/polishing of the cores was carried out by nebulizing on the moving tablets, with purposely provided guns for filming, the previously prepared mass of PEG 6000 in alcoholic suspension. The cores were thus treated once again at 30°C for approximately 3 minutes, up to complete cleaning of the rack of the coating pan from the waxy layer.

After completion of coating of the cores, they were left to dry for another 10 minutes once again at 30°C. Finally, the temperature was left to drop to 25°C so that it was possible to start emptying the coating pan, paying attention to preserve the tablets in purposely provided sachets impermeable to humidity. On the tablets thus produced no increase of the aqueous percentage content was noted.

### Example 7

**QUALITATIVE-QUANTITATIVE COMPOSITION**

| ***Description of the components*** | ***Quantity*** | | *Function* |
|---|---|---|---|
| ***Active ingredients*** | *wt%* | ***mg per tablet*** | |
| *Erythritol* | 64.00 | *32.00* | *Active ingredient* |
| *Sodium Cyclamate* | 20.00 | *10.00* | *Active ingredient* |
| *Sodium saccharin* | | *5.00* | *Active ingredient* |
| *Potassium acesulfame* | 3.00 | *1.50* | *Active ingredient* |

| ***Excipients*** | | | |
|---|---|---|---|
| *Polyplasdone XL-10 (1-vinyl 2 pyrrolidone less than 100 µm)* | 1. 00 | *1.00* | *Disgregrant* |
| *Polyplasdone INF 10 (1-vinyl 2 pyrrolidone less than 10 µm)* | 1. 00 | *0.50* | *Anti-adherent Lubricant Disgregant* |
| ***tablet total weight*** | 100.00 | ***50.00*** | |

**Table 2**

| Lot 002- cores of a weight of 50 mg/tablet (qualitative/quantitative composition, as per example 7) | | | | |
|---|---|---|---|---|
| Lot (T/t)¹ | Humidity % (K. Fischer) | Disgregation² (s) | Appearance³ (%) | Colour⁴ |
| 001 (20/0) | 0.76 | 4.67 | Compliant | White |
| 001A (40/1) | 0.86 | 5.13 | Compliant | White |
| 001B (40/3) | 0.89 | 5.09 | Compliant | White |
| 001C (40/6) | 1.45 | 5.08 | Compliant | White |

| | | | | |
|---|---|---|---|---|
| ¹ Temperature (°C)/time (months). | | | | |

The data in Table 2 highlight the excellent stability of the tablets.

The product was obtained following the procedure described in Example 6, eliminating a further excipient: PEG6000.

The process envisages the addition in this step of polyplasdone (polyvinylpolypyrrolidone) alone, in a specific granulometric mixture (<100 µm and < 10 µm in ratio 3:2). The two types of polyplasdone were selected and mixed in such a way that the resulting mixture performs the function of lubricant, disgregant, and machine anti-adherent instead of the common machine anti-adherent that can be used for this type and/or other types of tablets.

The tablets thus obtained, in addition to having a sugar-like palatability and being totally non-caloric, responded to all the rheological requirements: good compressibility and hardness (1.4 - 1.8 KP), excellent disgregation (< 5 s) and solubility (imperceptible insoluble residue).

### Example 8

The rheology of the active sweetening principles and of erythritol (as per Example 7) was verified individually, dry mixed, and wet mixed (in the particular mixing conditions described in the present text), subjecting the different specimens to differential scanning calorimetry (DSC).

Approximately 20 mg of each specimen were used for the analysis:
**I)** erythritol alone,
**II**) composition obtained in dry conditions (preparation process described in Example 1) of sweeteners + erythritol,
**III**) composition obtained in wet conditions (preparation process described in Example 6, paragraphs 1 to 4) of sweeteners + erythritol.

The compositions **II** and **III** presented the following formulations

| ***Description of the components*** | ***Quantity*** | | *Function* |
|---|---|---|---|
| ***Active ingredients*** | *wt%* | ***mg per tablet*** | |
| *Erythritol* | 65.5 | *31.00* | *Active ingredient* |
| *Sodium Cyclamate* | 21 | *10.00* | *Active ingredient* |
| *Sodium saccharin* | 10.5 | *5.00* | *Active ingredient* |
| *Potassium acesulfame* | 3 | *1.50* | *Active ingredient* |

| | | | |
|---|---|---|---|
| 1-3 mg of each specimen were analysed in the range between 50°°C and 300°C at a scanning rate of 10°C/min. | | | |

The analyses, performed in double were conducted in an inert nitrogen atmosphere, with a flow of approx. 30 ml/min. The instrument used was a scanning differential calorimeter PERKIN ELMER® equipped with liquid-nitrogen temperature-control system, model Pyris 7.

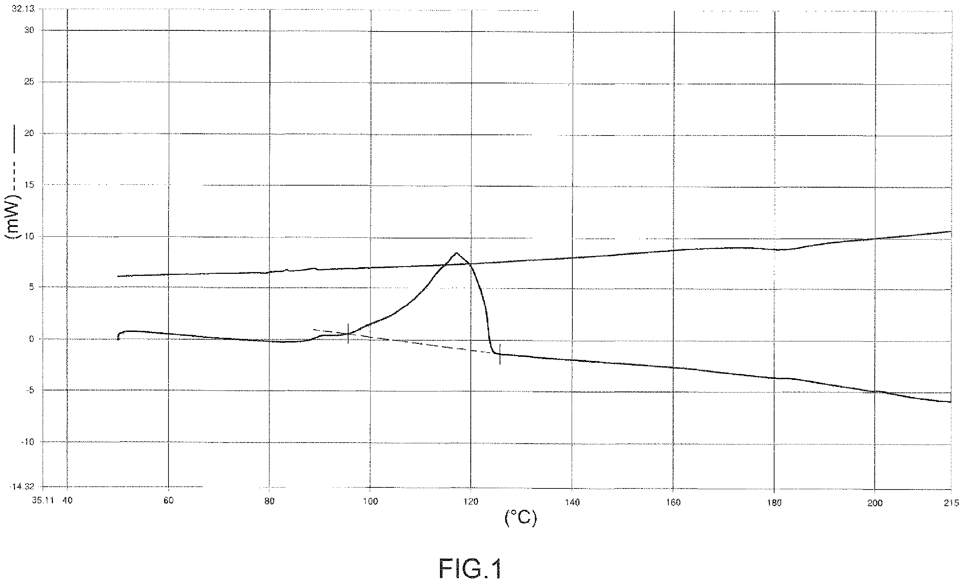

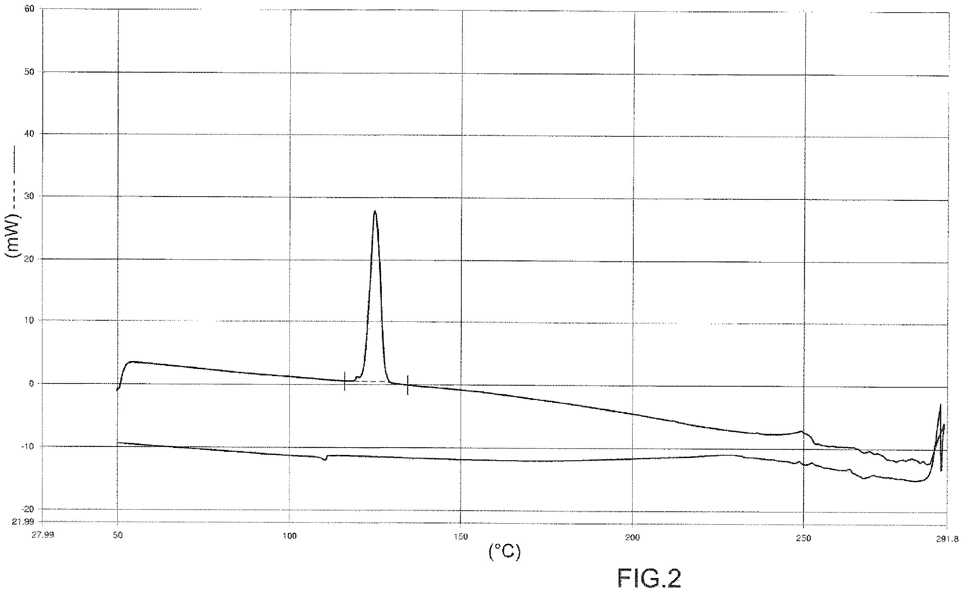

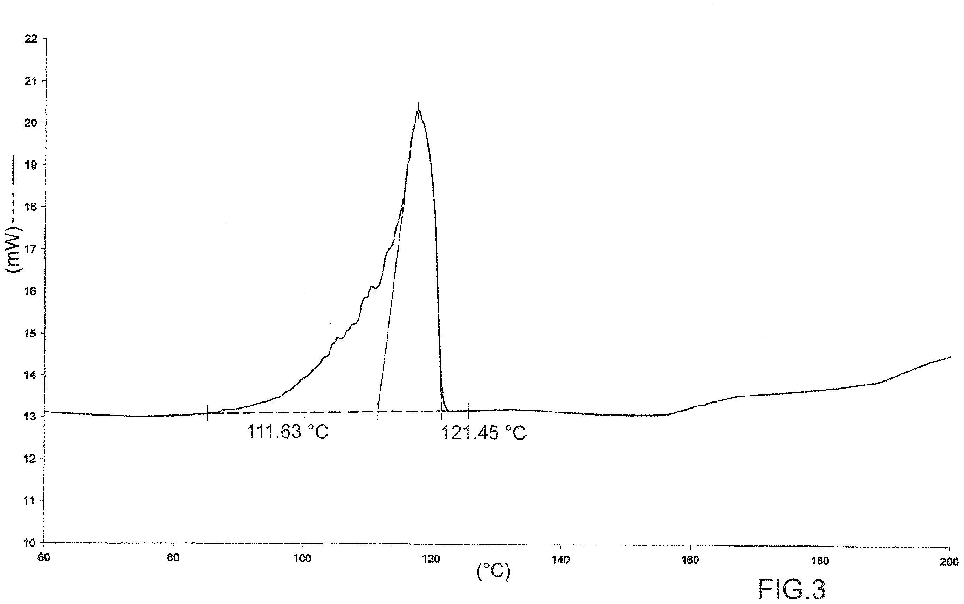

In the experimental conditions adopted, the analyses revealed the following:
- the thermogram of erythritol (Figure 2) presented a net melting endothermic peak exactly at 127.68°C, which shows the initial physical crystalline state of erythritol; in Figure 2, the onset values are 0.4599 mW and 127,78°C.
- in the thermograms obtained by analysing the composition obtained in dry conditions **II** (Figure 3) and the composition obtained in wet conditions **III** (Figure 1) we note:

In the dry composition **II**
- a shift of the endothermic peak characteristic of erythritol to melting values that are a little lower, centred at approximately 118°C, far from the original value of 127.68°C, but the peak remains a net peak both on the right and on the left still demonstrating once again the crystalline state of all the components.

In the wet composition **III**
- the transformation of the endothermic peak characteristic of erythritol into a single rather wide endothermic hump, centred at approximately 115.00°C, but with a net loss of the peak shape, which shows modification of the physical state.
- the disappearance of the peaks of the intensive sweeteners: sodium cyclamate (double endothermic peak centred between 260.00°C and 280.00°C); sodium saccharin (endothermic peak centred around 184.00°C); acesulfame k (exothermic peak centred around 270.00°C).

In Figure 1, the onset values are 0.9913 mW and 88.71°C.

In Figure 3, the onset and end values are 111.63°C and 121.45°C, respectively; the height of the peak is 7.1969 mW; the area of the peak is 443.636 mJ; the delta H is 160.9708 J/g.

These elements indicate the presence of interaction between the active components in the presence of water (solution/wet granulate) irrespective of the initial crystalline form of the active components. Furthermore, the experimental tests show how the active components of the mixture C were in a combined form different from the form in which the mixture B was found.

### Example 9

Measurements of x-ray diffraction on the specimens:
**IIIa, IIIb, IIIc:** Wet granulate (**IIIa, IIIb, IIIc** are three different specimens obtained separately following what is described in Example 8 for Composition **III**)
**IIa, IIb:** Dry granulate (**IIa, IIb** are two different specimens obtained separately following what is described in Example 8 for Composition **II**)

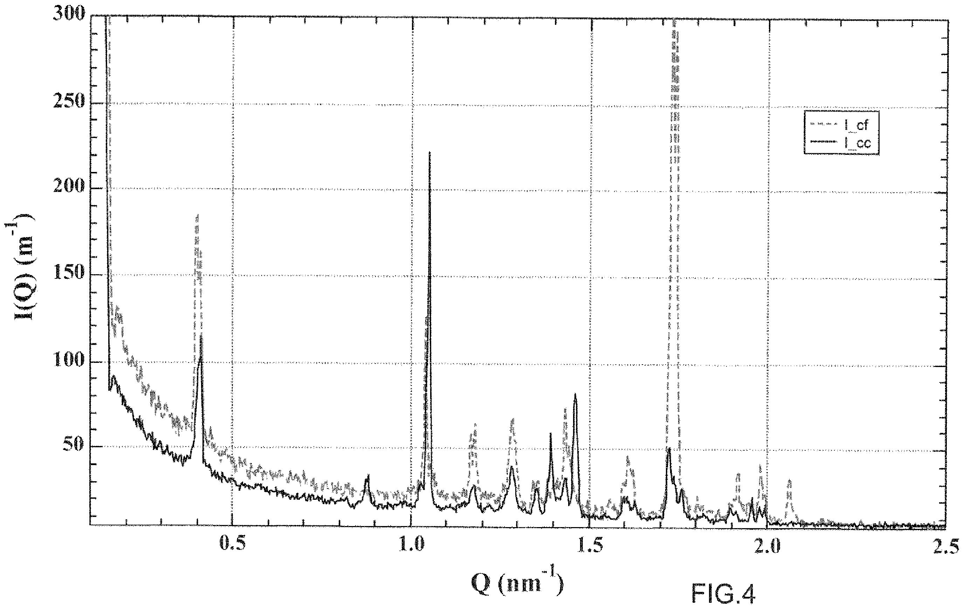

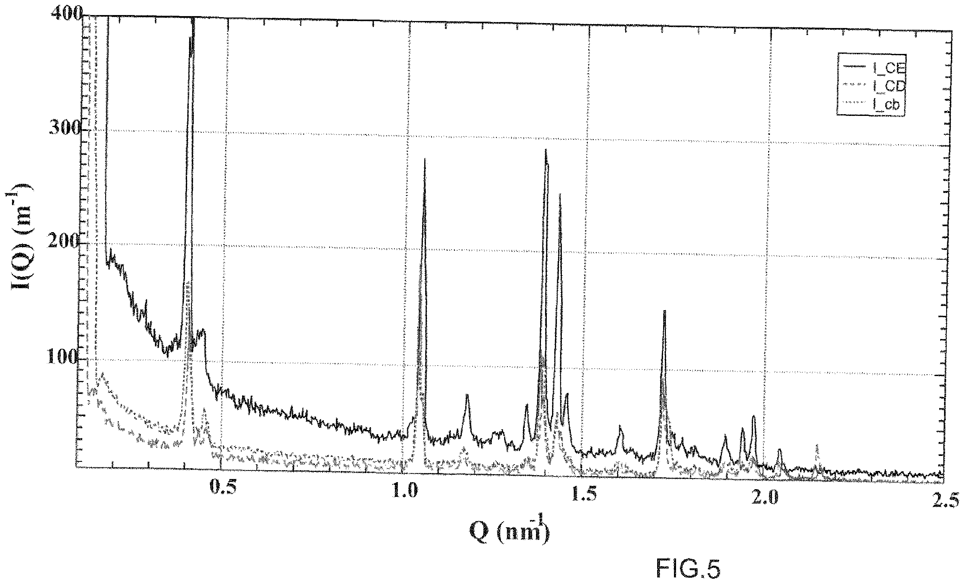

Results (the spectra of the specimens **IIa** and **IIb** are illustrated in Figure 4 and are designated, respectively, by **cf** and **cc;** the spectra of the specimens **IIIa, IIIb, IIIc** are illustrated in Figure 5 and are designated, respectively, by **CE, CD** and **cb**):
- the results confirm that **IIIa = IIIb = IIIc** and **IIa = IIb;**
- no significant differences were noted between **IIIa, IIIb,** and **IIIc;** hence, the "granulated" specimens were identical to one another;
- there was no evidence of the presence of amorphous in the specimens. They were all crystalline, i.e., they present a series of Bragg peaks.

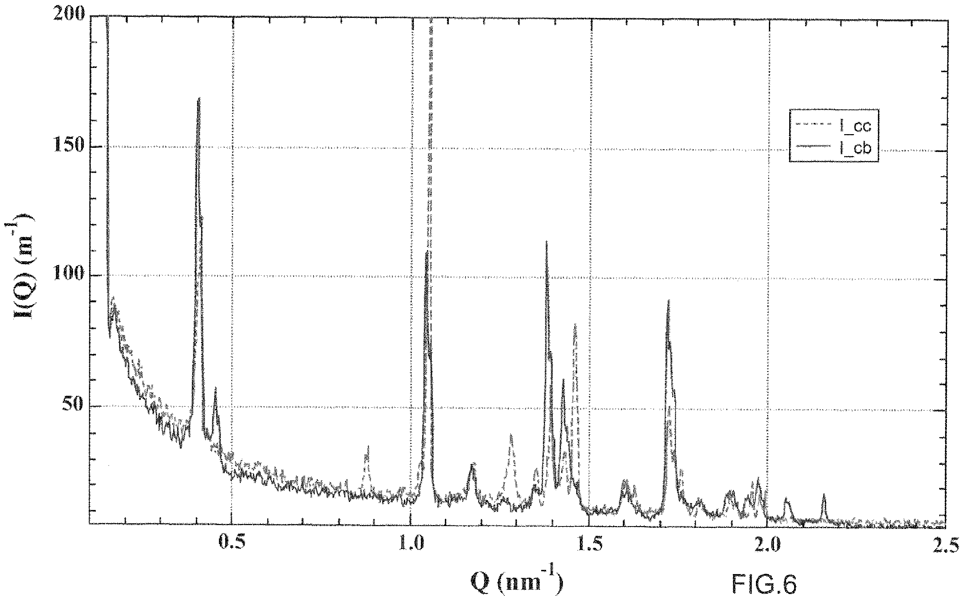

It should be noted that a crystalline specimen is characterized by the presence in the x-ray-diffraction spectrum (diffracted intensity as a function of the angle of diffraction) of a certain number of diffraction peaks (referred to as "Bragg peaks"), the position and intensity of which depends upon the type of crystal (cubic, monoclinic, orthorhombic, etc.) and upon how the atoms are distributed within the crystal itself (see Figure 6, which sets in comparison the spectrum of the specimens **IIb** - **cc** - and **IIIc** - **cb**). In the case of an amorphous (disorderly, non-crystalline) specimen no Bragg peaks are noted, but only a very wide band.

However, in the specimens **IIIa, IIIb and IIIc** there were additional peaks (that do not exist in the specimens **IIa and IIb**), and the intensity of some peaks had changed. The results are absolutely clear and repeatable. In particular, in the specimens **IIIa, IIIb** and **IIIc** we note: the disappearance of the peaks centred at approximately 13.95 Å (0.45 nm⁻¹), 3.06 Å (2.05 nm⁻¹), 2.92 Å (2.15 nm⁻¹); the appearance of peaks centred at approximately 7.38 Å (0.85 nm⁻¹), 5.024 Å (1.25 nm⁻¹), 4.33 Å (1.45 nm⁻¹); the variation of intensity of the peaks centred at approximately 5.98 Å (1.05 nm⁻¹), 4.48 Å (1.4 nm⁻¹), 3.69 Å (1.7 nm⁻¹).

It may be concluded that, since the specimens contain all the same components, the treatment of the granulate determines recrystallization of the system in a different combined crystalline form.

### Example 10

The relation between the physical state and the taste of the sweetener obtained was investigated, through a study of qualitative-discriminating analysis of a sensorial type, which involved a commission of 20 judges (10 females and 10 males) of an age comprised between 30 and 50 years, selected inside the firm of the present applicant and purposely trained in sensorial analysis.

The following products were examined:
**III**) sweetener obtained with the wet granulation process described by the present patent (see Example 8);
**II**) sweetener similar as composition to product **III,** but obtained by dry direct mixing of the individual ingredients (see Example 8);
**IV**) saccharose.

For each specimen of sweetener (**II** and **III**) an aqueous solution at 0.2% w/v was prepared corresponding as sweetening power to an aqueous solution of sugar equal to the 10% w/v (C). The solutions were prepared 1 hour before the assay and preserved at room temperature (20°C).

Each assayer evaluated the sweetened solutions without knowing the nature thereof (the specimens were presented in bowls encoded with three-figure numbers). Each judge was asked to follow the procedure of assay indicated hereinafter: rinsing his or her mouth with natural mineral water prior to evaluation; tasting the solutions in the order presented, from left to right; and answering the questions of each test proposed. In order to reduce the errors of a psychological and physiological nature committed by the judge during evaluation and due to the order of presentation of the specimens, the sequence of assay was randomized.

The measurements of the judges were finally subjected to variance analysis. Any consideration regarding distinguishability between the products was considered valid if supported by a probability of 95%.

The difference between the products **III** and **II** was evaluated with the **triangular test** (Ref. Standard: UNI EN ISO 4120 - October 31, 1987).

The aim of this test was to identify the different specimen in a set of three specimens presented.

Each assayer was presented with three specimens, corresponding to **III** and **II,** plus a reference (the same as **III** or **II**). The assayer had to identify the specimen that differed from the reference specimen.

To evaluate the results, the number of persons that gave the right answer was calculated, and then it was established whether the two specimens were statistically different.

The result obtained was of 17 right answers out of 20, so that statistically a highly significant difference was encountered between the two specimens (P > 99%).

**Example of form**

| **TRIANGULAR TEST** | | |
|---|---|---|
| **Product:** sweetener | | |
| **Assayer:** First name; Surname | | |
| **Date:** XX/XX/XXXX | | |
| Three specimens are presented identified by the codes: | | |
| 123 | 456 | 789 |
| Of these three specimens two are the same and one different. After assaying the three specimens indicate which specimen is different. | | |
| I have identified the specimen __________ as different. | | |

For the sweetening preparation **III** a test of comparison with the sugar (specimen **IV**) was then conducted.

The aim of this test was to evaluate the existence or otherwise of differences between Specimens **III** and **IV.**

Each assayer was presented with the two specimens, corresponding to **III** and **IV.** The assayer was required to evaluate whether there were differences between the two products examined.

To evaluate the results the number of persons that gave a positive answer was calculated, and then it was established whether the two specimens were statistically different.

The result obtained was of two positive answers out of twenty, so that it was statistically demonstrated that there did not exist a significant difference between the two specimens (P > 99.9%).

**Example of form:**

| **TEST OF COMPARISON IN PAIRS** | |
|---|---|
| **Product:** sweetener | |
| **Assayer:** First name; Surname | |
| **Date:** XX/XX/XXXX | |
| Two specimens are presented identified by the codes: | |
| 124 | 456 |
| Taste the two specimens, rinsing your mouth between one specimen and the other. | |
| The two specimens have a taste that is: | |
| □ the same | |
| □ different | |

The compositions according to the present invention are hence characterized by peculiar organoleptic (sugar-like palatability) and nutritional properties (the absence of caloric power and of glycemic impact, good digestive tolerance, the absence of potential allergens, non-cariogenicity).

## Claims

1. A method for the production of a sweetening composition, which comprises a weight percentage of erythritol that is higher than or equal to 55 wt% and less or equal to 85 wt% and a weight percentage of an intensive sweetener that is higher than or equal to 10 wt% and less than or equal to 40 wt%; erythritol and the intensive sweetener are combined so as to determine a combined form; the combined form differs from the crystalline form of pure erythritol; the method comprising:
a step of wet mixing, during which a wet mixture is mixed; the wet mixture comprises a percentage of erythritol that is higher than or equal to 55 wt% and less or equal to 85 wt%, with respect to the weight of the wet mixture, a percentage of an intensive sweetener that is higher than or equal to 10 wt% and less than or equal to 40 wt%, with respect to the weight of the wet mixture, and a percentage of water from 1 wt% to 10 wt%, with respect to the weight of the wet mixture;
a drying step, which is at least partially subsequent to the step of wet mixing and during which the wet mixture is at least partially dried so as to obtain a substantially dry mixture; the substantially dry mixture comprises from 0.1 wt% to 0.6 wt% (KF), with respect to the weight of the substantially dry mixture, of water;
a granulation step, which is subsequent to the drying step and during which the substantially dry mixture is granulated; and
a compression step, during which granules obtained during the granulation step are pressed together so as to obtain tablets.

2. The method according to Claim 1 , wherein the weight percentage of water in the wet mixture is from 3 wt% to 7 wt% with respect to the weight of the wet mixture.

3. The method according to Claim 1 or 2, and comprising an addition step, which precedes the compression step and during which added to the mixture is from 0.5 wt% to 10 wt% with respect to a sum of the weights of erythritol and of the intensive sweetener of polyvinylpolypyrrolidone.

4. The method according to Claim 3, wherein during the addition step there is added from 1 wt% to 5 wt%, with respect to a sum of the weights of erythritol and of the intensive sweetener, of polyvinylpolypyrrolidone in particles with a diameter ranging from 30µm to 50 µm, and/or from 1 wt% to 5 wt%, with respect to a sum of the weights of erythritol and of the intensive sweetener, of polyvinylpolypyrrolidone in particles with a diameter ranging from 5 µm to 10 µm.

5. The method according to any one of the preceding claims, wherein the intensive sweetener has a sweetening power at least 29 times the sweetening power of saccharose given the same weight.

6. The method according to any one of the preceding claims, wherein the intensive sweetener is selected in the group consisting of: acesulfame, aspartame, cyclamate, neohesperidin DC, saccharin, stevia, sucralose, neotame thaumatin, salts thereof, and a combination thereof.

7. The method according to Claim 6, wherein the intensive sweetener is selected in the group consisting of: acesulfame, aspartame, cyclamate and a combination thereof.

8. The method according to Claim 6 or 7, wherein the intensive sweetener consists of a sweetening mixture of cyclamate, saccharin and acesulfame; the sweetening mixture comprises from 29 wt% to the 35 wt% with respect to its own total weight of saccharin, and from 7 wt% to 12 wt% with respect to its own total weight of acesulfame.

## Patentansprüche

1. Verfahren zur Herstellung einer süssenden Zusammensetzung, umfassend einen Gewichtsprozentsatz an Erythritol, der höher als oder gleich wie 55 Gew.-% und weniger als oder gleich wie 85 Gew.-% ist, und einen Gewichtsprozentsatz eines Intensivsüssungsmittels, der höher als oder gleich wie 10 Gew.-% und weniger als oder gleich wie 40 Gew.-% ist;
Erythritol und das Intensivsüssungsmittel werden kombiniert, um eine kombinierte Form zu bestimmen; die kombinierte Form unterscheidet sich von der kristallinen Form des reinen Erythritols; wobei das Verfahren umfasst:
einen Schritt des Nassmischens, bei dem eine Nassmischung gemischt wird; die nasse Mischung umfasst einen Prozentsatz an Erythritol, der höher als oder gleich wie 55 Gew.-% und weniger als oder gleich wie 85 Gew.-%, in Bezug auf das Gewicht der Nassmischung, ist, einen Prozentsatz eines Intensivsüssungsmittels, der höher als oder gleich wie 10 Gew.-% und weniger als oder gleich wie 40 Gew.-%, in Bezug auf das Gewicht der Nassmischung, ist, und einen Prozentsatz an Wasser von 1 Gew.-% bis 10 Gew.-%, in Bezug auf das Gewicht der Nassmischung;
einen Trocknungsschritt, der zumindest teilweise dem Schritt des Nassmischens folgt und bei dem die Nassmischung zumindest teilweise getrocknet wird, um eine im Wesentlichen trockene Mischung zu erhalten; wobei die im Wesentlichen trockene Mischung 0,1 Gew.-% bis 0,6 Gew.-% (KF) an Wasser, in Bezug auf das Gewicht der im Wesentlichen trockenen Mischung umfasst;
einen Granulierungsschritt, der dem Trocknungsschritt folgt und bei dem die im wesentlichen trockene Mischung granuliert wird; und
einen Kompressionsschritt, bei dem die während des Granulationsschrittes erhaltenen Granulate zusammengedrückt werden, um Tabletten zu erhalten.

2. Verfahren nach Anspruch 1, wobei der Gewichtsprozentsatz an Wasser in der Nassmischung von 3 Gew.-% bis 7 Gew.-%, in Bezug auf das Gewicht der Nassmischung, ist.

3. Verfahren nach Anspruch 1 oder 2, und umfassend einen zusätzlichen Schritt, der dem Kompressionsschritt vorausgeht und bei dem der Mischung 0,5 Gew.-% bis 10 Gew.-%, in Bezug auf eine Summe der Gewichte von Erythritol und des Intensivsüssungsmittels, Polyvinylpolypyrrolidon zugesetzt wird.

4. Verfahren nach Anspruch 3, wobei während des Zusetzungsschrittes 1 Gew.-% bis 5 Gew.-%, in Bezug auf eine Summe der Gewichte von Erythritol und des Intensivsüssungsmittels, Polyvinylpolypyrrolidon in Teilchen mit einem Durchmesser im Bereich von 30 µm bis 50 µm und/oder 1 Gew.-% bis 5 Gew.-%, in Bezug auf eine Summe der Gewichte von Erythritol und des Intensivsüssungsmittels, Polyvinylpolypyrrolidon in Teilchen mit einem Durchmesser im Bereich von 5 µm bis 10 µm zugesetzt wird.

5. Verfahren nach einem der vorhergehenden Ansprüche, wobei das Intensivsüssungsmittel eine Süßkraft zumindest das 29-fache der Süsskraft von Saccharose bei gleichem Gewicht aufweist.

6. Verfahren nach einem der vorhergehenden Ansprüche, wobei das Intensivsüssungsmittel aus der Gruppe ausgewählt wird, bestehend aus: Acesulfam, Aspartam, Cyclamat, Neohesperidin DC, Saccharin, Stevia, Sucralose, Neotam Thaumatin, Salze davon und einer Kombination davon.

7. Verfahren nach Anspruch 6, wobei das Intensivsüssungsmittel aus der Gruppe ausgewählt wird, bestehend aus: Acesulfam, Aspartam, Cyclamat und einer Kombination davon.

8. Verfahren nach Anspruch 6 oder 7, wobei das Intensivsüssungsmittel aus einer süssenden Mischung von Cyclamat, Saccharin und Acesulfam besteht; die süssende Mischung umfasst 29 Gew.-% bis 35 Gew.-%, in Bezug auf ihr eigenes Gesamtgewicht, von Saccharin, und 7 Gew.-% bis 12 Gew.-%, in Bezug auf ihr eigenes Gesamtgewicht, von Acesulfam.

## Revendications

1. Procédé de préparation d'une composition édulcorante comprenant un pourcentage en poids d'érythritol étant supérieur ou égal à 55 % en poids et inférieur ou égal à 85 % en poids et un pourcentage en poids d'un édulcorant intense étant supérieur ou égal à 10 % en poids et inférieur ou égal à 40 % en poids ; l'érythritol et l'édulcorant intense sont combinés de manière à déterminer une forme combinée ; la forme combinée diffère de la forme cristalline d'érythritol pur ; le procédé comprenant :
une étape de mélange humide, au cours de laquelle un mélange humide est mélangé; le mélange humide comprend un pourcentage d'érythritol étant supérieur ou égal à 55 % en poids et inférieur ou égal à 85 % en poids par rapport au poids du mélange humide, un pourcentage d'un édulcorant intense étant supérieur ou égal à 10 % en poids et inférieur ou égal à 40 % en poids par rapport au poids du mélange humide, et un pourcentage d'eau compris entre 1 et 10 % en poids par rapport au poids du mélange humide;
une étape de séchage étant au moins partiellement consécutive à l'étape de mélange humide et durant laquelle le mélange humide est au moins partiellement séché de sorte à obtenir un mélange substantiellement sec; le mélange substantiellement sec comprend entre 0,1 et 0, 6 % en poids (KF) d'eau par rapport au poids du mélange substantiellement sec;
une étape de granulation étant consécutive à l'étape de séchage et durant laquelle le mélange substantiellement sec est granulé; et
une étape de compression, durant laquelle les granules obtenus lors de l'étape de granulation sont pressés ensemble pour obtenir des comprimés.

2. Procédé selon la revendication 1, dans lequel le pourcentage en poids d'eau dans le mélange humide est compris entre 3 et 7 % en poids par rapport au mélange humide.

3. Procédé selon la revendication 1 ou 2, et comprenant une étape supplémentaire qui précède l'étape de compression et durant laquelle il est ajouté au mélange de 0,5 à 10 % en poids de polyvinylpolypyrrolidone par rapport à une somme des poids d'érythritol et d'édulcorant intense.

4. Procédé selon la revendication 3, dans lequel lors de l'étape supplémentaire il est ajouté de 1 à 5 % en poids de polyvinylpolypyrrolidone en particules ayant un diamètre compris entre 30 et 50 µm par rapport à une somme des poids d'érythritol et d'édulcorant intense, et/ou de 1 à 5 % en poids de polyvinylpolypyrrolidone en particules ayant un diamètre compris entre 5 et 10 µm par rapport à une somme des poids d'érythritol et d'édulcorant intense.

5. Procédé selon l'une quelconque des revendications précédentes, dans lequel l'édulcorant intense comporte un pouvoir sucrant au moins 29 fois supérieur au pouvoir sucrant du saccharose à poids égal.

6. Procédé selon l'une quelconque des revendications précédentes, dans lequel l'édulcorant intense est sélectionné dans le groupe composé des éléments suivants: acésulfame, aspartame, cyclamate, néohespéridine DC, saccharine, stevia, sucralose, thaumatine néotame, leurs sels et une combinaison de ceux-ci.

7. Procédé selon la revendication 6, dans lequel l'édulcorant intense est sélectionné dans le groupe constitué des éléments suivants: acésulfame, aspartame, cyclamate et une combinaison de ceux-ci.

8. Procédé selon la revendication 6 ou 7, dans lequel l'édulcorant intense consiste en un mélange d'édulcorant de cyclamate, saccharine et d'acésulfame; le mélange édulcorant comprend de 29 à 35 % en poids par rapport à son propre poids total de saccharine, et de 7 à 12 % en poids par rapport à son propre poids total d'acésulfame.
